# EUROPÄISCHE PATENTSCHRIFT

(11) **EP 2 603 388 B1**
(45) Veröffentlichungstag und Bekanntmachung des Hinweises auf die Patenterteilung: **02.10.2013**
(21) Anmeldenummer: 11743969.5
(22) Anmeldetag: 28.07.2011
(51) Int. Cl.: F04D 29/16, F04D 29/54, F04D 29/60, B60H 1/00

(54) **GEBLÄSEANORDNUNG**
FAN ARRANGEMENT
SYSTÈME DE VENTILATION

(30) Priorität: 22.02.2011 DE 202011003007 U; 10.08.2010 DE 202010011429 U
(43) Veröffentlichungstag der Anmeldung: 19.06.2013
(73) Patentinhaber: Ebm-Papst St. Georgen GmbH & CO. KG, 78112 St. Georgen (DE)
(72) Erfinder: KUHNERT, Gerhard, 78098 Unterkirnach (DE)
(74) Vertreter: Raible, Tobias
(86) Internationale Anmeldenummer: PCT/EP2011/003777
(87) Internationale Veröffentlichungsnummer: WO 2012/019712

(56) Entgegenhaltungen:
- EP-A1- 2 138 334
- DE-A1-102005 004 450
- DE-A1-102008 026 692
- US-A1- 2003 037 912

## Beschreibung

Die Erfindung betrifft eine Gebläseanordnung mit Lüftern.

Zur Kühlung in Telefon- und Sendeanlagen sind Trays bekannt, in denen mehrere Lüfter in einer Art Schublade angeordnet sind. Solche Anordnungen ermöglichen einen einfachen Austausch defekter Lüfter, erfordern aber viel Platz, der bei manchen Anwendungen nicht vorhanden ist. Auch sind solche Trays schwer, was bei mobilen Anwendungen unerwünscht ist, da hierdurch der Energieverbrauch steigt.

In Kraftfahrzeugen wird für die Belüftung üblicherweise ein einzelnes Radialgebläse verwendet, das eine entsprechende Größe in alle drei Raumrichtungen hat. Insbesondere bei Kleinwagen kann es schwierig sein, hierfür einen Bauraum zu finden. Dies gilt besonders für Hybridfahrzeuge mit ihren großen und schweren Batterien, die im Betrieb sehr heiß werden können und dann effizient gekühlt werden müssen.

Die US 2003/037912 A1 zeigt eine Klimaanlage mit einem Gebläse und einem Rahmen mit Seitenwänden, einer Bodenwand, einer oberen Wand und einer Vorderwand zur Aufnahme des Gebläserads. Die Vorderwand hat eine Gebläserad-Vertiefung. Die Gebläserad-Vertiefung hat einen Spiralgehäuse-Bereich. Die Welle des Gebläserads erstreckt sich in den Spiralgehäuse-Bereich und durch die Vorderwand hindurch zu einem Antrieb. Die offene Seite der Gebläserad-Vertiefung ist durch eine Abdeckung mit einer runden Einlassöffnung und einem rechteckförmigen Rohrstutzen verschlossen, wobei die runde Öffnung axial zur Drehachse des Gebläserads ausgerichtet ist. Die Abdeckung ist an der Vorderwand des Rahmens befestigt.

Es ist deshalb eine Aufgabe der Erfindung, eine neue Gebläseanordnung bereit zu stellen.

Diese Aufgabe wird gelöst durch den Gegenstand des Schutzanspruchs 1. Eine Gebläseanordnung mit n Lüftern, wobei n > 1 ist, hat eine Gehäuseanordnung zur Aufnahme dieser Lüfter, welche Gehäuseanordnung ein erstes Gehäuseteil mit Durchströmöffnungen aufweist, die jeweils einem der Lüfter zugeordnet sind, und mindestens eine Montageöffnung hat, durch welche ein Lüfter in dieses erste Gehäuseteil eingeführt und im Bereich der zugeordneten Durchströmöffnung befestigt werden kann, und ein zweites Gehäuseteil, welches auf einer Seite mit dem ersten Gehäuseteil auf dessen Seite mit der mindestens einen Montageöffnung verbunden ist und auf der anderen Seite eine Luftaustrittsöffnung aufweist.

Man kann so auf engem Raum mehrere Lüfter unterbringen. Das können Lüfter einer Standardbauart sein, so dass sie preiswert sind und bei Defekten leicht ausgetauscht werden können. Auch können bei Bedarf einzelne Lüfter zu- oder abgeschaltet werden, z. B. über einen Bus.

Durch die Aufteilung der Lüfterleistung auf eine Mehrzahl von kleineren Lüftern wird es möglich, die Form der Gehäuseteile sehr individuell an den vorhanden Bauraum anzupassen, z. B. durch eine gewundene Bauweise, wodurch eine Vielzahl von Bauformen ermöglicht wird und der vorhandene Bauraum sehr gut ausgenutzt werden kann. Es sind auch ein geringes Gewicht und ein guter Wirkungsgrad erreichbar.

Bevorzugt ist das erste Gehäuseteil mindestens bereichsweise gewunden ausgebildet. Bevorzugt sind die Lüfter als Gerätelüfter ausgebildet, denen zu ihrem Antrieb jeweils ein Elektromotor zugeordnet ist. Bevorzugt ist das zweite Gehäuseteil zum Anschluss eines Filters, zu kühlender elektrischer Geräte oder dergleichen ausgebildet. Bevorzugt ist das zweite Gehäuseteil gewunden ausgebildet. Bevorzugt weisen die Lüfter Lüfterräder auf, die jeweils um eine Drehachse drehbar sind, und die Drehachsen mindestens eines Teils dieser Lüfterräder verlaufen unter einem Winkel zueinander, der von der Parallelität verschieden ist. Bevorzugt sind die Lüfter mindestens teilweise als Radiallüfter ausgebildet. Bevorzugt sind die Lüfter mindestens teilweise als Axiallüfter ausgebildet.

Eine bevorzugte Weiterbildung ergibt sich aus dem Gegenstand des Anspruchs 8, wonach die Lüfter einzeln oder gruppenweise einschaltbar sind.

Durch die Möglichkeit, die Lüfter einzeln anzusteuern bzw. einschalten zu können, kann in Fällen, in denen ein geringer Luftstrom benötigt wird, durch Abschalten eines Teils der Lüfter Energie gespart werden.

Bevorzugt hat mindestens ein Teil der Lüfter eine von einander verschiedene Resonanzfrequenz. Bevorzugt ist die Gebläseanordnung mit anwenderspezifischen Peripheriebauteilen versehen. Bevorzugt ist die Gebläseanordnung im Bereich der Instrumententafel eines Kraftfahrzeugs angeordnet, um die dortigen elektronischen Geräte zu kühlen, wobei die gewundene Ausführung des ersten Gehäuseteils an die Raumverhältnisse im Bereich der Instrumententafel angepasst ist. Bevorzugt übernimmt die Gebläseanordnung Kühlaufgaben in einem Kraftfahrzeug, wobei die gewundene Ausführung des ersten Gehäuseteils an die Raumverhältnisse im Kraftfahrzeug angepasst ist. Bevorzugt ist mindestens ein Teil der Lüfter im ersten Gehäuseteil auf einem zugeordneten Sockel angeordnet ist. Bevorzugt ist den Lufteinlässen mindestens eines Teils der Lüfter ein gemeinsames Filterorgan zugeordnet. Bevorzugt ist zwischen dem Filter und den Lufteinlässen ein Abstützglied für das Filterorgan vorgesehen. Bevorzugt ist das Filter in einem Filtergehäuse angeordnet, welches abnehmbar am ersten Gehäuseteil angeordnet ist. Bevorzugt ist im zweiten Gehäuseteil mindestens einem der Lüfter ein separater Ausblaskanal zugeordnet. Bevorzugt ist am Auslass eines Ausblaskanals mindestens ein Luftleitflügel vorgesehen, um den Volumenstrom zu steuern, der im Betrieb durch diesen Ausblaskanal strömt. Bevorzugt ist n > 2.

Gemäß einer bevorzugten Ausführungsform hat ein Kraftfahrzeug eine solche Gebläseanordnung.

Weitere Einzelheiten und vorteilhafte Weiterbildungen der Erfindung ergeben sich aus den im folgenden beschriebenen und in der Zeichnung dargestellten, in keiner Weise als Einschränkung der Erfindung zu verstehenden Ausführungsbeispielen, sowie aus den Unteransprüchen. Es zeigt:
- Fig. 1: eine raumbildliche Darstellung einer Gebläseanordnung (20), bei der die Luft an einem ersten Gehäuseteil (22) durch ein Filter (74) angesaugt und durch ein zweites Gehäuseteil (40) ausgeblasen und z. B. einem zu kühlenden Objekt zugeführt wird,
- Fig. 2: eine Draufsicht, gesehen längs des Pfeiles II der Fig. 1,
- Fig. 3: eine Darstellung analog Fig. 2, bei der aber das Luftfilter nicht dargestellt ist,
- Fig. 4: einen Schnitt, gesehen längs der Linie IV-IV der Fig. 2,
- Fig. 5: eine Explosionsdarstellung des ersten Gehäuseteils,
- Fig. 6: einen Schnitt, gesehen längs der Linie VI-VI der Fig. 3,
- Fig. 7: einen Schnitt, gesehen längs der Linie VII-VII der Fig. 3.
- Fig. 8: eine vergrößerte, raumbildliche Darstellung des Schaltkastens 36, der in den Fig. 1 bis 3 dargestellt ist.
- Fig. 9: eine Seitenansicht, gesehen in Richtung des Pfeils IX der Fig. 8,
- Fig. 10: eine Seitenansicht, gesehen in Richtung des Pfeils X der Fig. 8,
- Fig. 11: eine Seitenansicht, gesehen in Richtung des Pfeils XI der Fig. 8,
- Fig. 12: eine stark schematisierte, raumbildliche Darstellung einer bestückten Leiterplatte 94, die sich im Schaltkasten 36 befindet, und
- Fig. 13: eine Draufsicht auf die Leiterplatte 94, analog Fig. 12.

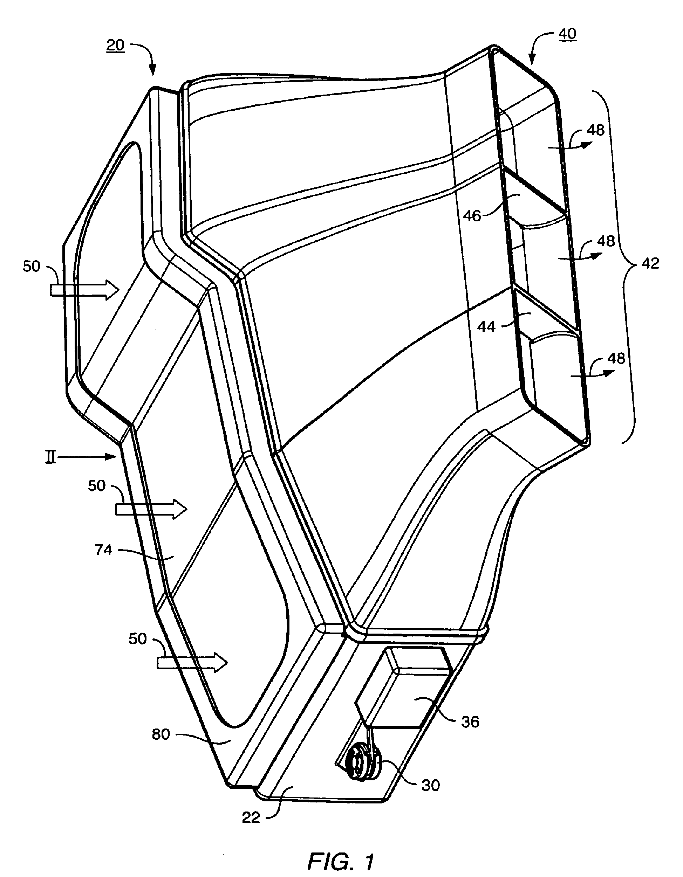

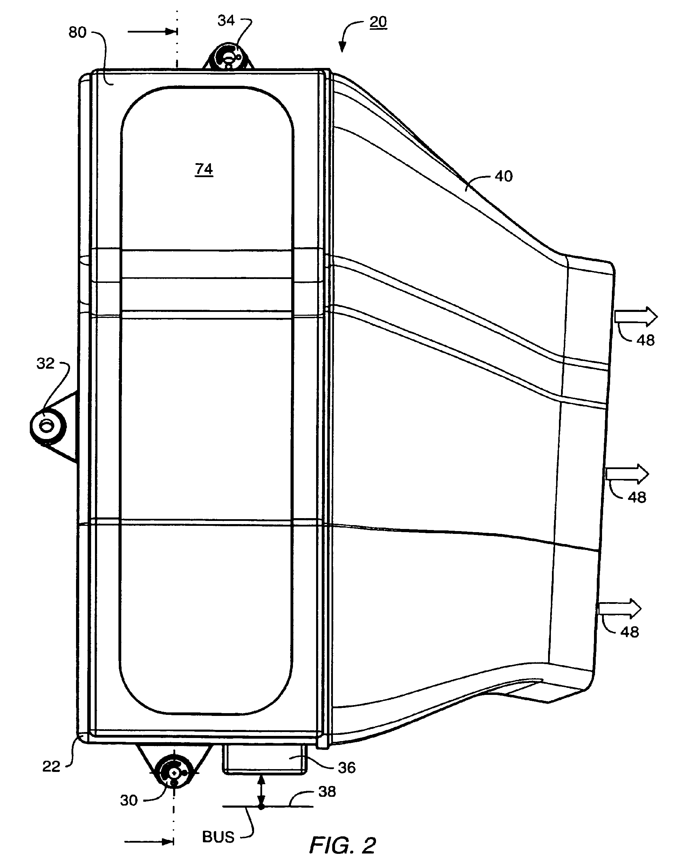

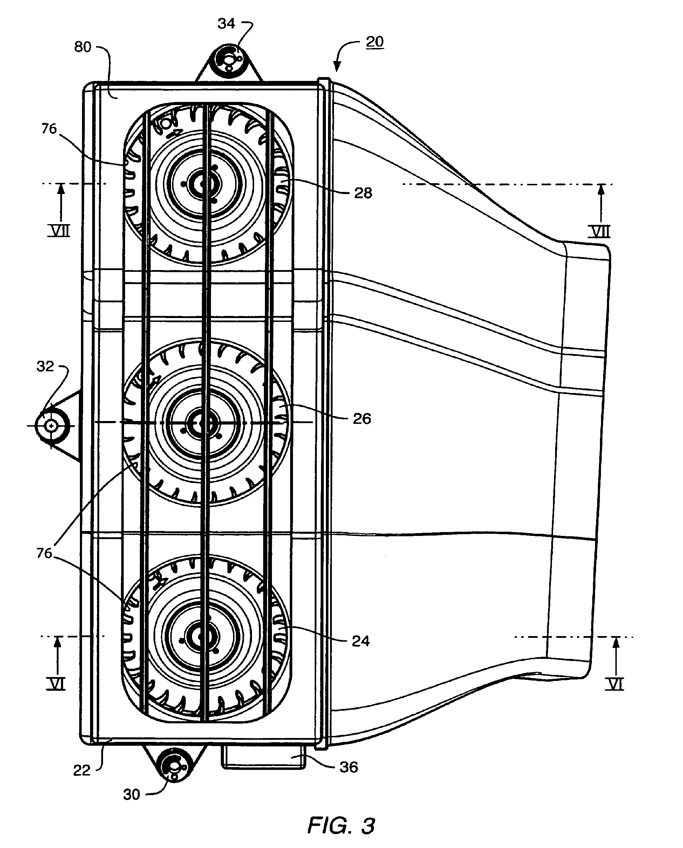

**Fig. 1** und **Fig. 2** zeigen die äußere, sehr kompakte Form einer Gebläseanordnung 20. Diese hat ein erstes Gehäuseteil 22, in welchem, wie in **Fig. 3** dargestellt, drei Radiallüfter 24, 26, 28 angeordnet sind, deren Drehrichtung (UZS) durch Pfeile angedeutet ist. Außen am ersten Gehäuseteil 22 können beispielsweise drei schwingungsdämpfende Aufhängungen 30, 32, 34 vorgesehen sein, mit denen das erste Gehäuseteil 22 an einer beliebigen Stelle befestigt werden kann. Diese Aufhängungen reduzieren die Übertragung von Körperschall. Ferner ist am ersten Gehäuseteil 22 ein Schaltkasten 36 angebracht. Dieser enthält (nicht dargestellte) elektronische Bauelemente, die z.B. zur Verbindung mit einem Steuerbus 38 dienen, mit dessen Hilfe die Lüfter 24, 26, 28 gesteuert werden können. Es gibt verschiedene Arten solcher Steuerbusse, die dem Fachmann geläufig sind.

Diese Bauteile können auch dazu dienen, die Lüfter 24, 26, 28 auf etwas unterschiedliche Drehzahlen einzustellen, um akustische Effekte, z. B. Resonanzen, zu reduzieren.

In Fig. 1 befindet sich rechts vom ersten Gehäuseteil 22 ein zweites Gehäuseteil 40, das bei diesem Ausführungsbeispiel nur die Funktion hat, die von den Lüftern 24, 26, 28 geförderte Luft einem Auslass 42 zuzuführen, wobei Luftleitflügel 44, 46 vorgesehen sind, um den Volumenstrom, der von den einzelnen Lüftern 24, 26, 28 erzeugt wird, abzustimmen, so dass eine Überlastung einzelner Lüfter vermieden wird. Die durch Pfeile 50 symbolisierte Luft (Fig. 1) wird durch die Durchströmöffnungen 76 (Fig. 3) von den Lüftern 24, 26, 28 angesaugt. Die ausströmende Luft wird durch Pfeile 48 symbolisiert, und die angesaugte Luft durch Pfeile 50. Sofern Axiallüfter verwendet werden, kann auch die Bewegungsrichtung der Luft umgekehrt werden, wozu dann über den Bus 38 die Drehrichtung der Axiallüfterräder reversiert wird.

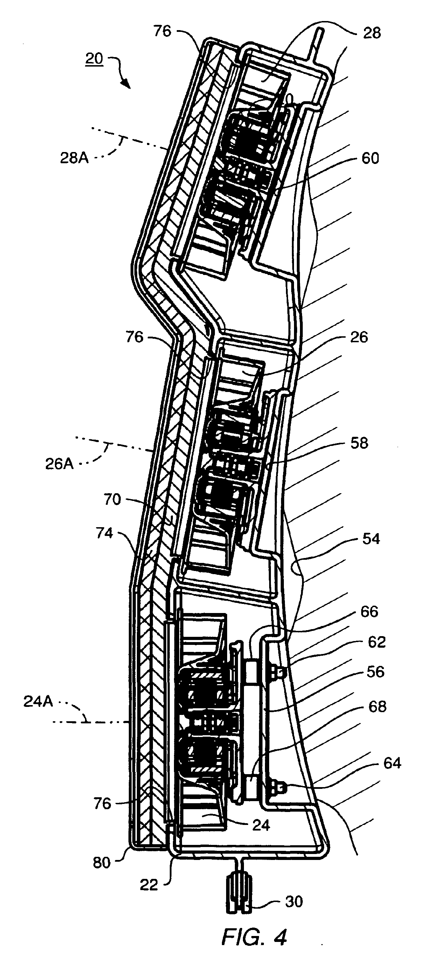

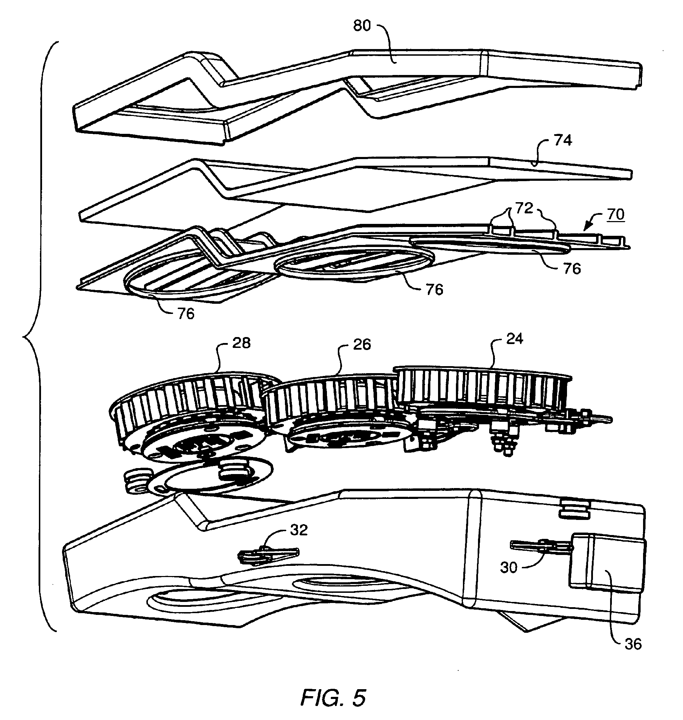

Wie die Fig. 1, **Fig. 4** und **Fig. 5** gut zeigen, ist das erste Gehäuseteil 22 so geformt, dass es z. B. optimal an die Form des Hohlraums 54 eines (nicht dargestellten) Fahrzeugs angepasst ist, der z.B. durch eine Instrumententafel, die im Bereich der Instrumententafel angeordneten Bauteile oder dergleichen definiert wird, wie dies in Fig. 4 als Teil des Fahrzeugs angedeutet ist. Die Form des Hohlraums 54 ist hier z. B. konkav, könnte aber ebenso flach oder konvex sein. Sehr vorteilhaft ist, dass auch eine Anpassung an die Form von gewundenen Hohlräumen möglich ist. In Fig. 4 sind die zum Antrieb der Lüfter 24, 26, 28 vorgesehenen Elektromotoren zu sehen.

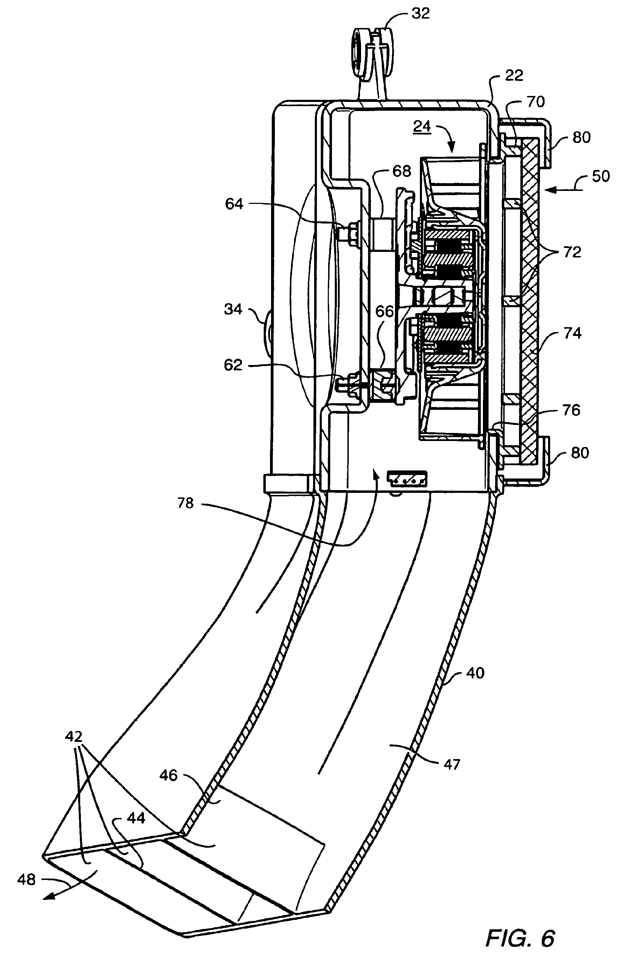

Zu diesem Zweck sind im ersten Gehäuseteil 22 Sockel 56, 58, 60 vorgesehen. Auf dem Sockel 56 ist der Lüfter 24 beispielsweise mittels Schrauben 62, 64 und Gummipuffern 66, 68 befestigt, vgl. auch **Fig. 6**. Es sind auch andere Befestigungs- und Entkopplungsmittel wie Gummi-Clip-Verbindungen möglich. Auf dem Sockel 58 ist der Lüfter 26 befestigt, und auf dem Sockel 60 der Lüfter 28. Auf diese Weise kann jeder einzelne Lüfter in der gewünschten Weise räumlich orientiert werden, entsprechend den lokalen Erfordernissen, z. B. in einem Fahrzeug.

Die dargestellten Lüfter sind Radiallüfter, jedoch können bei Bedarf auch andere Lüftertypen verwendet werden.

Wie man in Fig. 4 ohne weiteres erkennt, brauchen die Drehachsen 24A, 26A, 28A der drei Lüfter 24, 26, 28 bzw. der Lüfterräder nicht parallel zueinander verlaufen. Z. B. könnte die Drehachse 26A senkrecht zur Drehachse 24A verlaufen, und die Drehachse 28A könnte, z. B. senkrecht zur Drehachse 26A verlaufen.

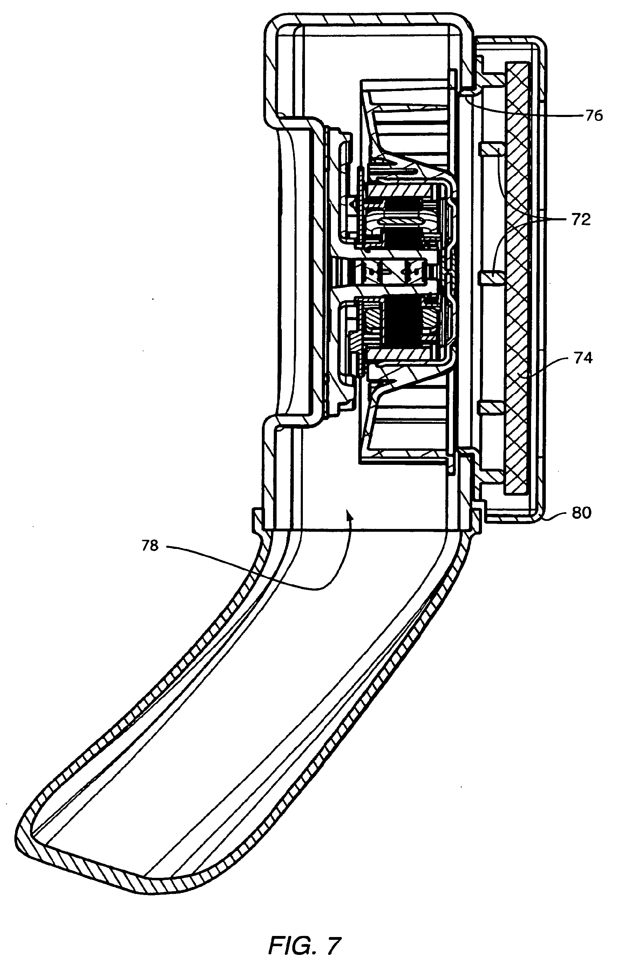

Auf der Einlassseite der drei Lüfter 24, 26, 28 ist ein Abstützelement 70 in Form eines Gitters befestigt. Es hat Längsrippen 72, vgl. Fig. 3 und **Fig. 7**. Diese dienen zur Abstützung eines Filterorgans 74, damit dieses nicht von den Lüfterrädern angesaugt werden kann. Außerdem hat das Abstützelement 70 drei Ausnehmungen (Durchströmöffnungen, Lufteinlässe) 76 (Fig. 4), durch welche die Luft in die Lüfter 24, 26, 28 einströmen kann.

Das Filterorgan 74 wird durch ein Filtergehäuse 80 lösbar festgehalten, damit es ausgetauscht werden kann. Die Form des Filtergehäuses 80 ist an die Form des ersten Gehäuseteils 22 angepasst, vgl. Fig. 4, und presst dieses dadurch gegen das Abstützelement 70.

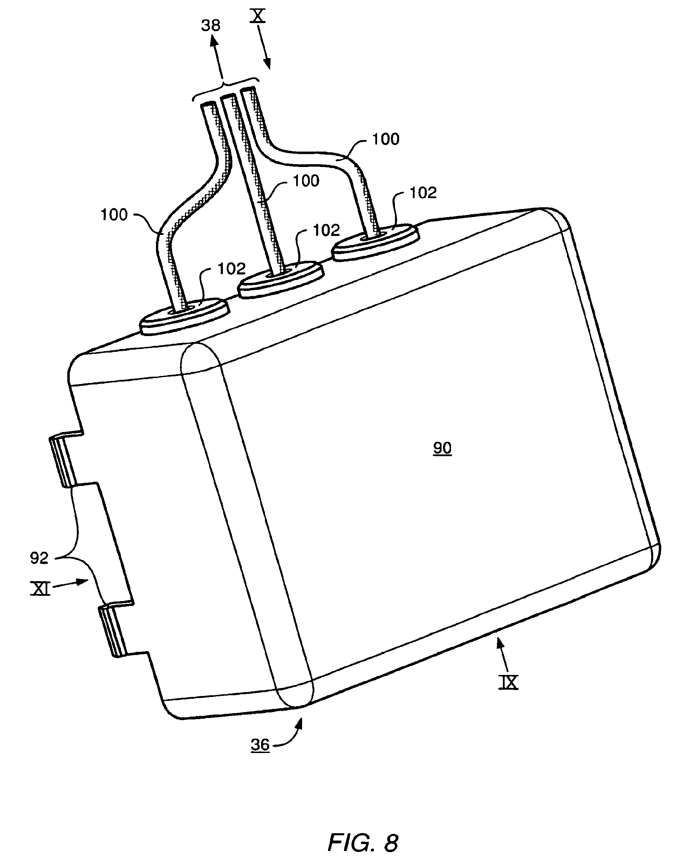

**Fig. 8** ist eine vergrößerte perspektivische Darstellung des Schaltkastens 36 der Fig. 1 bis Fig. 3. Dieser hat eine Gehäusekappe 90, die mit vier federnden Laschen 92 versehen ist, mit deren Hilfe sie in entsprechenden Ausnehmungen des Gehäuseteils 22 eingerastet ist.

Der Schaltkasten 36 enthält eine zentrale Elektronik für alle drei Lüfter 24, 26, 28, um diese Lüfter aufeinander abzustimmen. Bei der Montage in einem Kraftfahrzeug kann es nämlich sein, dass die Lüfter mit unterschiedlichen Leistungen und folglich unterschiedlichen Drehzahlen arbeiten müssen, und dann muss man versuchen, die Lüfter mit unterschiedlichen Drehzahlen so zu betreiben, dass störende akustische Phänomene vermieden werden. Auch kann es notwendig sein, einen oder auch mehrere der Lüfter 24, 26, 28 selektiv aus- und einzuschalten, z. B. über den zentralen Bus 38, der in Fig. 2 dargestellt ist.

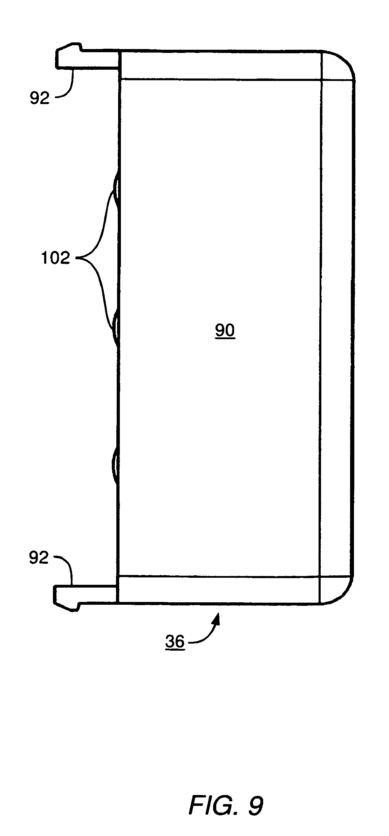

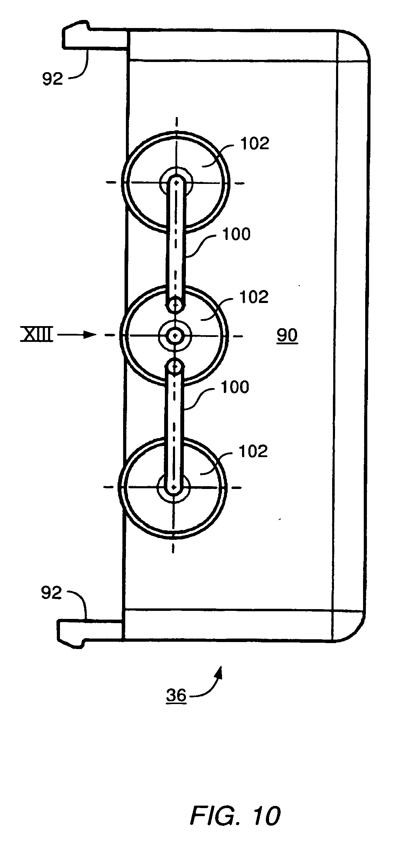

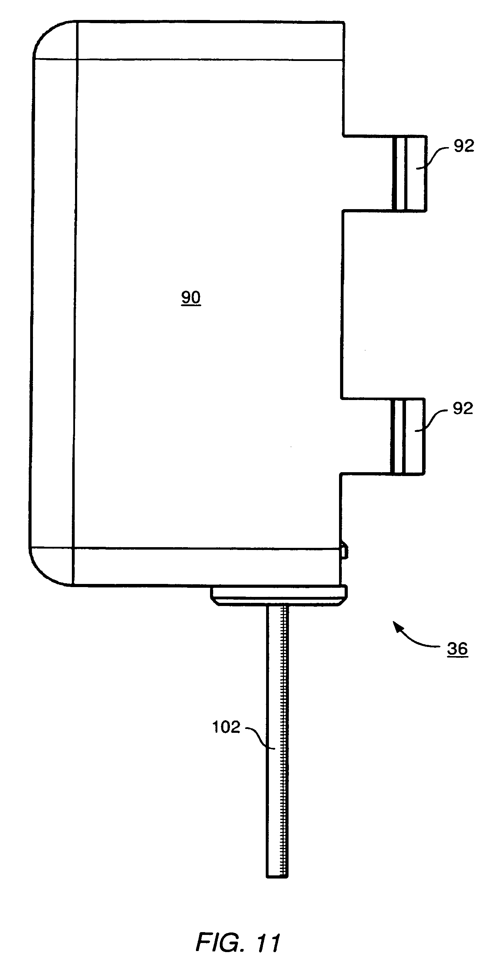

**Fig. 9** bis **Fig. 11** zeigen Seitenansichten zur Fig. 8.

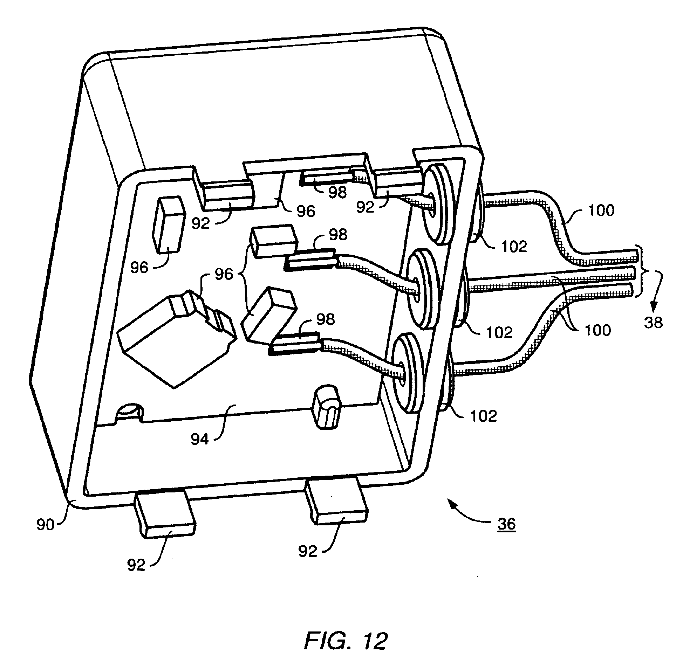

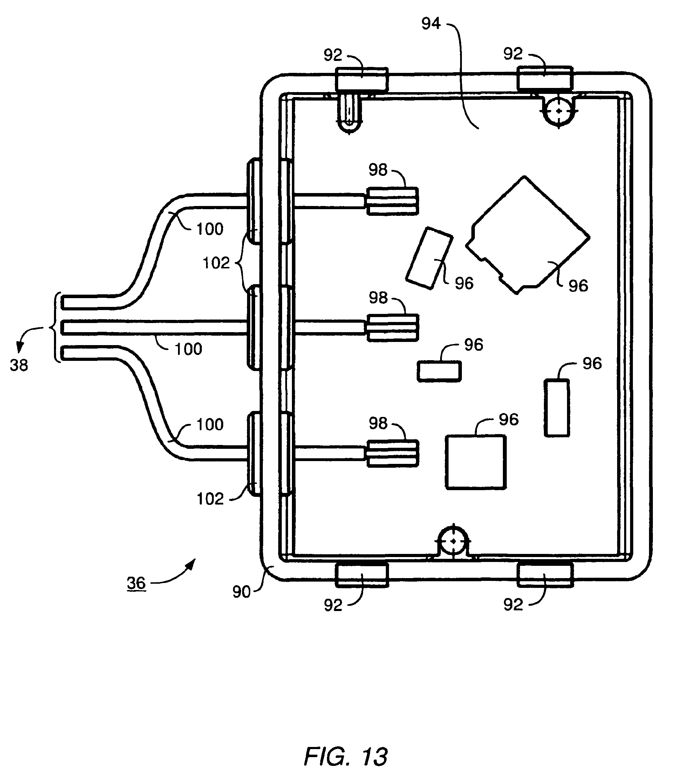

Die **Fig. 12** und **Fig. 13** zeigen eine Leiterplatte 94, auf der schematisch elektronische Bauelemente 96 dargestellt sind. Ferner befinden sich auf der Leiterplatte 94 Anschlüsse 98, an welche drei Verbindungsleitungen 100 zum zentralen Bus 38 angeschlossen sind. Die Verbindungsleitungen 100 sind in der üblichen Weise durch Dichtungen 102 in der Wand der Kappe 90 durchgeführt, um das Eindringen von Feuchtigkeit in den Schaltkasten 36 zu verhindern.

Naturgemäß sind im Rahmen der vorliegenden Erfindung vielfache Abwandlungen und Modifikationen möglich, um die Gebläseanordnung an verschiedene Raumformen anzupassen.

Statt drei Lüftern können z. B. auch zwei, vier, fünf oder sechs Lüfter 22, 24, 26 vorgesehen sein.

Sensoren (z. B. für Temperatur und Feuchtigkeit der Luft) können z. B. im zweiten Gehäuseteil 40 angeordnet werden.

Es kann jedem oder einem Teil der Lüfter ein separater Ausblaskanal 47 (Fig. 6) zugeordnet sein, und es können auch gemeinsame Ausblaskanäle 47 für jeweils zwei oder mehr Lüfter 22, 24, 26 vorgesehen sein.

Bevorzugt haben die Lüfter 22, 24, 26 und/oder der Schaltkasten 36 eine Schutzart, die mindestens der Norm IP54 entspricht.

## Patentansprüche

1. Gebläseanordnung mit n Lüftern, wobei n > 1 ist,
mit einer Gehäuseanordnung (22, 40) zur Aufnahme dieser Lüfter (24, 26, 28), welche Gehäuseanordnung (22, 40) aufweist:
a) ein erstes Gehäuseteil (22) mit Durchströmöffnungen (76), die jeweils einem der Lüfter (24, 26, 28) zugeordnet sind,
und mit mindestens einer Montageöffnung (78), durch welche ein Lüfter (24, 26, 28) in dieses erste Gehäuseteil (22) eingeführt und im Bereich der zugeordneten Durchströmöffnung (76) befestigt werden kann;
b) ein zweites Gehäuseteil (40), welches
- auf einer Seite mit dem ersten Gehäuseteil (22) auf dessen Seite mit der mindestens einen Montageöffnung (78) verbunden ist und
- auf einer anderen Seite mindestens eine Luftaustrittsöffnung (42) aufweist.

2. Gebläseanordnung nach Anspruch 1, bei welcher das erste Gehäuseteil (22) mindestens bereichsweise gewunden ausgebildet ist.

3. Gebläseanordnung nach Anspruch 1 oder 2, bei welcher die Lüfter (24, 26, 28) als Gerätelüfter (24, 26, 28) ausgebildet sind, denen zu ihrem Antrieb jeweils ein Elektromotor zugeordnet ist.

4. Gebläseanordnung nach einem der vorhergehenden Ansprüche, bei welcher das zweite Gehäuseteil (40) zum Anschluss eines Filters, zu kühlender elektrischer Geräte oder dergleichen ausgebildet ist.

5. Gebläseanordnung nach einem der vorhergehenden Ansprüche, bei welcher das zweite Gehäuseteil (40) gewunden ausgebildet ist.

6. Gebläseanordnung nach einem der vorhergehenden Ansprüche, bei welcher die Lüfter (24, 26, 28) Lüfterräder aufweisen, die jeweils um eine Drehachse drehbar sind, und die Drehachsen (24A, 26A, 28A) mindestens eines Teils dieser Lüfterräder unter einem Winkel zueinander verlaufen, der von der Parallelität verschieden ist.

7. Gebläseanordnung nach einem der vorhergehenden Ansprüche, bei welcher die Lüfter (24, 26, 28) mindestens teilweise als Radiallüfter (24, 26, 28) oder mindestens teilweise als Axiallüfter ausgebildet sind.

8. Gebläseanordnung nach einem der vorhergehenden Ansprüche, bei welcher die Lüfter (24, 26, 28) einzeln oder gruppenweise einschaltbar sind.

9. Gebläseanordnung nach einem der vorhergehenden Ansprüche, bei welcher mindestens ein Teil der Lüfter (24, 26, 28) eine von einander verschiedene Resonanzfrequenz hat.

10. Gebläseanordnung nach einem der vorhergehenden Ansprüche, welche im Bereich der Instrumententafel eines Kraftfahrzeugs angeordnet ist, um die dortigen elektronischen Geräte zu kühlen, wobei die gewundene Ausführung des ersten Gehäuseteils (22) an die Raumverhältnisse im Bereich der Instrumententafel angepasst ist.

11. Gebläseanordnung nach einem der vorhergehenden Ansprüche, welche Kühlaufgaben in einem Kraftfahrzeug übernimmt, wobei die gewundene Ausführung des ersten Gehäuseteils (22) an die Raumverhältnisse im Kraftfahrzeug angepasst ist.

12. Gebläseanordnung nach einem der vorhergehenden Ansprüche, bei welcher mindestens ein Teil der Lüfter (22, 24, 26) im ersten Gehäuseteil (22) auf einem zugeordneten Sockel (56, 58, 60) angeordnet ist.

13. Gebläseanordnung nach einem der vorhergehenden Ansprüche, bei welcher den Durchströmöffnungen (76) mindestens eines Teils der Lüfter (22, 24, 26) ein gemeinsames Filter (74) zugeordnet ist.

14. Gebläseanordnung nach Anspruch 13, bei welcher zwischen dem Filter (74) und den Durchströmöffnungen (76) ein Abstützglied (70) für das Filter (74) vorgesehen ist.

15. Gebläseanordnung nach einem der vorhergehenden Ansprüche, bei welcher im zweiten Gehäuseteil (40) mindestens einem der Lüfter (24, 26, 28) ein separater Ausblaskanal (47) zugeordnet ist.

16. Gebläseanordnung nach Anspruch 15, bei welcher am Auslass eines Ausblaskanals (47) mindestens ein Luftleitflügel (44, 46) vorgesehen ist, um den Volumenstrom zu steuern, der im Betrieb durch diesen Ausblaskanal (47) strömt.

17. Gebläseanordnung nach einem der vorhergehenden Ansprüche, bei welcher n > 2 ist.

18. Kraftfahrzeug mit einer Gebläseanordnung nach einem der vorhergehenden Ansprüche.

## Claims

1. Blower arrangement having *n* fans, where *n* is > 1, having a casing arrangement (22, 40) for accommodating the said fans (24, 26, 28), which casing arrangement (22, 40) has:
a) a first casing part (22) having through-flow apertures (76) which are each associated with one of the fans (24, 26, 28),
and having at least one mounting aperture (78) through which a fan (24, 26, 28) can be introduced into the said first casing part (22) and fastened in the region of the associated through-flow aperture(76); and
b) a second casing part (40) which
- is connected, on one side, to the first casing part (22) having the at least one mounting aperture (78) and,
- on another side, has at least one air outlet aperture (42).

2. Blower arrangement according to Claim 1, in which the first casing part (22) is constructed in a winding manner, at least in certain regions.

3. Blower arrangement according to Claim 1 or 2, in which the fans (24, 26, 28) are constructed as instrument fans (24, 26, 28), with each of which an electric motor is associated for driving it.

4. Blower arrangement according to one of the preceding claims, in which the second casing part (40) is constructed for the connection of a filter, electrical instruments which are to be cooled, or the like.

5. Blower arrangement according to one of the preceding claims, in which the second casing part (40) is constructed in a winding manner.

6. Blower arrangement according to one of the preceding claims, in which the fans (24, 26, 28) have fan wheels which are each rotatable about an axis of rotation, and the axes of rotation (24A, 26A, 28A) of at least some of the said fans extend at an angle to one another that differs from parallelism.

7. Blower arrangement according to one of the preceding claims, in which the fans (24, 26, 28) are constructed, at least in some cases, as radial fans (24, 26, 28) or, at least in some cases, as axial fans.

8. Blower arrangement according to one of the preceding claims, in which the fans (24, 26, 28) can be switched on individually or in groups.

9. Blower arrangement according to one of the preceding claims, in which at least some of the fans (24, 26, 28) have resonance frequencies that differ from one another.

10. Blower arrangement according to one of the preceding claims, which is arranged in the region of the instrument panel of a motor vehicle, in order to cool the electronic instruments located at that point, the winding design of the first casing part (22) being adapted to the spatial conditions in the region of the instrument panel.

11. Blower arrangement according to one of the preceding claims, which undertakes cooling functions in a motor vehicle, the winding design of the first casing part (22) being adapted to the spatial conditions within the motor vehicle.

12. Blower arrangement according to one of the preceding claims, in which at least some of the fans (24, 26, 28) are arranged in the first casing part (22) on an associated base (56, 58, 60).

13. Blower arrangement according to one of the preceding claims, in which a common filter (74) is associated with the through-flow apertures (76) of at least some of the fans (24, 26, 28).

14. Blower arrangement according to Claim 13, in which a supporting member (70) for the filter (74) is provided between said filter (74) and the through-flow apertures (76).

15. Blower arrangement according to one of the preceding claims, in which a separate blowing-out duct (47) is associated, within the second casing part (40), with at least one of the fans (24, 26, 28).

16. Blower arrangement according Claim 15, in which at least one air-guiding vane (44, 46) is provided at the outlet of a blowing-out duct in order to control the volume flow that flows through the said blowing-out duct (47) during operation.

17. Blower arrangement according to one of the preceding claims, in which *n* is > 2.

18. Motor vehicle having a blower arrangement according to one of the preceding claims.

## Revendications

1. Système de ventilation avec n ventilateurs, n étant supérieur à 1,
avec un ensemble de boîtier (22, 40) pour recevoir ces ventilateurs (24, 26, 28), ledit ensemble de boîtier (22, 40) présentant :
a) une première partie de boîtier (22) avec des ouvertures de passage (76) qui sont respectivement associées à un des ventilateurs (24, 26, 28),
et avec au moins une ouverture de montage (78), par laquelle un ventilateur (24, 26, 28) peut être introduit dans cette première partie de boîtier (22) et fixé dans la région de l'ouverture de passage associée (76) ;
b) une deuxième partie de boîtier (40),
- qui sur un côté est assemblée à la première partie de boîtier (22), sur le côté de celle-ci qui est pourvu de l'ouverture de montage au moins unique (78),
- et qui sur un autre côté présente au moins une ouverture de sortie d'air (42).

2. Système de ventilation selon la revendication 1, dans lequel la première partie de boîtier (22) est réalisée au moins sectoriellement sinueuse.

3. Système de ventilation selon la revendication 1 ou 2, dans lequel les ventilateurs (24, 26, 28) sont réalisés sous la forme de ventilateurs d'appareils (24, 26, 28), à chacun desquels est associé un moteur électrique pour son entraînement.

4. Système de ventilation selon l'une des revendications précédentes, dans lequel la deuxième partie de boîtier (40) est conçue pour le raccordement d'un filtre, d'appareils électriques à refroidir ou analogues.

5. Système de ventilation selon l'une des revendications précédentes, dans lequel la deuxième partie de boîtier (40) est réalisée sinueuse.

6. Système de ventilation selon l'une des revendications précédentes, dans lequel les ventilateurs (24, 26, 28) présentent des roues de ventilateurs qui sont respectivement rotatives autour d'un axe de rotation, et les axes de rotation (24A, 26A, 28A) d'au moins une partie de ces roues de ventilateurs s'étendent entre eux sous un angle qui diffère du parallélisme.

7. Système de ventilation selon l'une des revendications précédentes, dans lequel les ventilateurs (24, 26, 28) sont réalisés au moins pour partie sous forme de ventilateurs radiaux (24, 26, 28) ou au moins pour partie sous forme de ventilateurs axiaux.

8. Système de ventilation selon l'une des revendications précédentes, dans lequel les ventilateurs (24, 26, 28) peuvent être activés individuellement ou par groupes.

9. Système de ventilation selon l'une des revendications précédentes, dans lequel au moins certains des ventilateurs (24, 26, 28) ont des fréquences de résonance respectives différentes.

10. Système de ventilation selon l'une des revendications précédentes, qui est disposé dans la région du tableau de bord d'un véhicule automobile pour refroidir les appareils électroniques qui s'y trouvent, sachant que l'exécution sinueuse de la première partie de boîtier (22) est adaptée aux proportions en volume dans la région du tableau de bord.

11. Système de ventilation selon l'une des revendications précédentes, qui assure des fonctions de refroidissement dans un véhicule automobile, sachant que l'exécution sinueuse de la première partie de boîtier (22) est adaptée aux proportions en volume dans le véhicule automobile.

12. Système de ventilation selon l'une des revendications précédentes, dans lequel au moins certains des ventilateurs (24, 26, 28) sont disposés dans la première partie de boîtier (22) sur un socle associé (56, 58, 60).

13. Système de ventilation selon l'une des revendications précédentes, dans lequel un filtre commun (74) est associé aux ouvertures de passage (76) d'au moins certains des ventilateurs (24, 26, 28).

14. Système de ventilation selon l'une des revendications précédentes, dans lequel un élément de soutien (70) pour le filtre (74) est prévu entre le filtre (74) et les ouvertures de passage (76).

15. Système de ventilation selon l'une des revendications précédentes, dans lequel un canal d'évacuation séparé (47) est associé à au moins un des ventilateurs (24, 26, 28) dans la deuxième partie de boîtier (40).

16. Système de ventilation selon la revendication 15, dans lequel au moins une ailette de guidage d'air (44, 46) est prévue à la sortie d'un canal d'évacuation (47) afin de commander le débit volumétrique qui s'écoule en fonctionnement par ce canal d'évacuation (47).

17. Système de ventilation selon l'une des revendications précédentes, dans lequel n est supérieur à 2.

18. Véhicule automobile avec un système de ventilation selon l'une des revendications précédentes.
